# EUROPÄISCHE PATENTSCHRIFT

(11) **EP 4 141 074 B1**
(45) Veröffentlichungstag und Bekanntmachung des Hinweises auf die Patenterteilung: **29.05.2024**
(21) Anmeldenummer: 22189688.9
(22) Anmeldetag: 10.08.2022
(51) Int. Cl.: C09D 5/00

(54) **GRAFFITI-SCHUTZ**
GRAFFITI PROTECTION
PROTECTION CONTRE LES GRAFFITIS

(30) Priorität: 24.08.2021 DE 102021121926
(43) Veröffentlichungstag der Anmeldung: 01.03.2023
(73) Patentinhaber: Scheidel GmbH & Co. KG, 96114 Hirschaid (DE)
(72) Erfinder: Stropp-Kilian, Jürgen, 96114 Hirschaid (DE); Scheidel, Georg, 96114 Hirschaid (DE)
(74) Vertreter: Schneiders & Behrendt Bochum

(56) Entgegenhaltungen:
- WO-A1-93/22372
- WO-A1-2016/058104
- WO-A1-2019/090456
- US-A- 5 910 369

## Beschreibung

Die Erfindung betrifft ein Beschichtungssystem mit mindestens zwei Schichten zum Schutz vor Graffitis.

Graffitis sind als "Street-Art" Teil in unserem alltäglichen Leben geworden. Nicht jedes Graffiti ist jedoch gewollt und die Grenze zwischen Kunst und Vandalismus scheint häufiger als gewollt überschritten. Insbesondere das willkürliche Beschmieren von Objekten und Gegenständen verursacht hohe Kosten hinsichtlich der Entfernung oder Ausbesserung.

Graffitis werden mit Graffitifarben unterschiedlichster chemischer Zusammensetzung überwiegend mit Spraydosen oder Marker-Stiften aufgebracht. Eine weitere Graffitiform ist das sogenannte "Etching". Beim Etching werden Schriftzüge und Symbole mit Hilfe von ätzenden Chemikalien (z.B. Säuren in Säurestiften) in die Oberfläche geätzt. Durch die irreversible Beschädigung der Oberfläche beim Etching ist eine Instandsetzung mit den herkömmlichen Reinigungsmethoden nicht mehr möglich, auch die etablierten Graffitischutz-Beschichtungen und Imprägnierungen verlieren hier ihre Wirksamkeit.

Inzwischen hat sich in der Graffiti Szene noch eine weitere Variante etabliert, die sogenannten "Invisible Inks" oder auch als "Stealth Ink". Hierbei werden mit einer speziellen augenscheinlich farblosen Tinte in einem Stift Symbole und Tags gezeichnet, die zunächst als unsichtbare ("invisible") klare farblose Flüssigkeit erscheinen, dann aber nach mehreren Stunden als braunes metallisch glänzendes Pigment deutlich sichtbar werden.

Die "Invisible Inks" nutzen einen chemischen Prozess, die Bildung von sogenanntem "Zementkupfer". Das braune metallisch glänzende Pigment ist elementares Kupfer, das aus einer Kupfersalz-Lösung durch gleichzeitig vorhandenes elementares Eisen ausgefällt wird. Diesen Vorgang nennt man "Zementieren".

Eine Weiterentwicklung der "Invisible Inks" sind Graffiti-Tinten-Stifte, die neben den Kupfer-abscheidenden Komponenten zusätzlich noch ein stark deckendes Pigment (in der Regel Schwarz, tiefes Dunkelblau oder ähnliches) enthalten. Bei der Applikation dieser Tinten-Stifte sieht man zuerst das farbige Pigment, jedoch scheidet sich zusätzlich, nach dem oben beschriebenen Mechanismus, im Untergrund das elementare Kupfer ab. Nach einer Reinigung mit handelsüblichen Graffitireinigern, die leicht in der Lage sind das stark deckende farbige Pigment an der Oberfläche zu lösen, bleibt jedoch wiederum das unlösliche elementar abgeschiedene Kupfer auf der Objektoberfläche zurück.

Diese metallisch glänzend braune Kupferschicht hat sich dann bereits fest mit der Oberfläche verbunden und lässt sich nur noch mechanisch oder mit starken Säuren chemisch entfernen. Die Oberflächen sind in jedem Fall beschädigt oder in ihrem Erscheinungsbild stark beeinträchtigt.

Mit den Problemen, die vor allem die neueren, hoch aggressiven Graffitifarben verursachen, kämpfen derzeit nicht allein Privatleute, sondern insbesondere Verkehrsbetriebe und Betreiber von Gebäuden und Einrichtungen im öffentlichen Raum.

Denn diese aggressiven Graffitifarben mit Säuren oder Invisible Inks schädigen selbst solche Oberflächen irreversibel, die schon mit sehr widerstandsfähigen Graffitischutzlacken auf der Basis von Epoxid- oder PU-Bindemittel behandelt wurden.

Die beschädigten Oberflächen müssen kostenintensiv repariert oder gar komplett erneuert werden. Denn das elementar abgeschiedene Kupfer der Invisible Ink frisst sich ebenso wie die Säure von Säure-Stiften in die Schutzbeschichtung und führt zu einer irreversiblen Beschädigung der Schutzbeschichtung.

Nicht filmbildende Graffitischutzsysteme wie beispielsweise Imprägnierungen oder nicht dauerhafte Schutzsysteme auf der Basis von Wachsen oder Polysacchariden können zudem auch den Untergrund vor derartigen Attacken nicht schützen.

Im Stand der Technik sind verschiedene Anti-Graffiti Beschichtungen bekannt. WO 2019/090456 A1 beschreibt eine ein- oder zweikomponentige Beschichtungszusammensetzung mit einem alkoxyfunktionellen Siliconharz, einem Hydroxysiliconöl, einem Aminosilan und einem Katalysator, wobei das alkoxyfunktionelle Silikonharz und das Hydroxysilikonöl in einer zweikomponentigen Beschichtungszusammensetzung in unterschiedlichen Komponenten vorliegen.

US 5,910,369 A und WO 1993/22372 A1 beschreiben Beschichtungssysteme zum Schutz von Oberflächen und zur leichteren Entfernung unerwünschter Substanzen wie beispielsweise Sprühfarben. Die Beschichtungen umfassen ein Epoxidharz auf Wasserbasis, das ein Bisphenol-A-Harz und ein Polyamidharz enthält, oder ein aliphatisches Urethan, das ein Polymer mit reaktiven Stellen enthält, die mit einem Isocyanat und einem aliphatischen Isocyanat reagieren.

WO 2016/058104 A1 beschreibt Beschichtungszusammensetzungen auf Polyurethan- und Epoxidbasis, die dauerhafte Beschichtungen mit einer Dicke von etwa 10 nm bis etwa 10 µm ermöglichen. Diese Beschichtungen sind abriebfest und schützen unter anderem vor Graffiti.

Es ist somit Aufgabe der Erfindung, eine Beschichtung bereitzustellen, die die genannten Nachteile nicht aufweist und insbesondere einen Schutz gegen säure- und Invisible Ink-haltige Graffitifarben bereitzustellen.

Gelöst wird diese Aufgabe durch eine Erfindung mit den Merkmalen des Anspruchs 1. Vorteilhafte Ausgestaltungen sind jeweils Gegenstand der abhängigen Ansprüche. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Die zu schützende Oberfläche kann aus einem beliebigen Material, etwa Metall, Fliesen, Klinker, mineralische Substrate, Holz oder Kunststoff, bestehen und ist häufig mit einer Lackschicht versehen. Es versteht sich, dass das erfindungsgemäße Beschichtungssystem auch für den Auftrag auf Lackschichten geeignet ist.

Das erfindungsgemäße Beschichtungssystem zum Schutz vor Graffitis umfasst zwei Lackkomponenten, nachfolgend der Einfachheit halber als Lackkomponenten bezeichnet, nämlich eine erste Lackkomponente, die eine chemisch hochbeständige Schutzschicht bildet, die auf der vor Graffitis zu schützenden Oberfläche vorgesehen ist, und eine zweite Lackkomponente, die eine filmbildende Funktionsschicht bildet, die auf der Schutzschicht, die für die Funktionsschicht auch als Grundierungsschicht dient, vorgesehen ist. Die Funktionsschicht wird erst nach einer Trocknungszeit der Schutzschicht von 6 bis 48 Stunden aufgetragen, um eine reaktive Anbindung der Funktionsschicht an die Schutzschicht herbeizuführen. Vorzugsweise wird die Funktionsschicht erst nach einer Trocknungszeit von 12 bis 24 Stunden auf die Schutzschicht aufgetragen.

Die Lackkomponenten können ein-, zwei- oder mehrkomponentig vorgesehen sein.

Nachfolgend wird aus Gründen der Einfachheit der Begriff "Schutzschicht", soweit nicht ausdrücklich anders angegeben, synonym auch für eine Grundierungsschicht beziehungsweise für die erste Lackkomponente verwendet. Ebenso wird der Begriff "Funktionsschicht", soweit nicht ausdrücklich anders angegeben, synonym auch für die zweite Lackkomponente verwendet. Dabei ist dem Fachmann klar, dass es sich bei einer Lackkomponente um eine streichfähige Masse handelt, die erst nach Trocknung zu einer Schicht mit den gewünschten Eigenschaften aushärtet und sich somit tatsächlich auch in ihrer chemischen Zusammensetzung, Struktur und ihren Eigenschaften von der ursprünglich aufgetragenen Lackkomponente unterscheidet.

Die Schutzschicht basiert auf Epoxid- und/oder PU-Bindemitteln, wobei Epoxy-Siloxan-Bindemittel und insbesondere Silikon-Epoxid-Hybridharz-Bindemittel bevorzugt sind. Diese haben sich als beständiger gegenüber ätzenden und Metall abscheidenden Materialien erwiesen.

Die Funktionsschicht basiert bevorzugt auf Kombinationen von Silan und/oder Siloxan und/oder Silikon und insbesondere auf Polydimethylsiloxan mit funktionellen Gruppen als Bindemittel, wobei als funktionelle Gruppen bevorzugt Alkoxy-terminierte Siloxane vorgesehen sind.

Entsprechend wird in einer bevorzugten Ausführungsform des erfindungsgemäßen Verfahrens in einem ersten Schritt die chemisch hochbeständige und vernetzte Schutzschicht auf der vor Graffitiattacken zu schützenden Oberflächen appliziert. Es ist zu empfehlen, die Altbeschichtungen zunächst zu reinigen bzw. anzulaugen und mit einem Schleifvlies anzupaden, um einen guten Haftverbund mit der Schutzschicht zu gewährleisten

Als Schutzschicht können vor allem Beschichtungen auf der Basis von speziellen Epoxid- und/oder PU-Bindemitteln dienen, wobei insbesondere Silikon-Epoxid-Hybridharze als Bindemittel bevorzugt sind.

Die Schutzschicht auf der Basis von Silikon-Epoxid-Hybridharzen als Bindemitteln wird vorzugsweise mit Hilfe von Amino-Alkoxy-Silanen als Härter chemisch vernetzt und stellt somit als 2-komponentiges Lacksystem eine chemisch hochbelastbare Schutzschicht dar. Die Schutzschicht kann mehrschichtig aufgetragen werden, wobei eine einschichtige Schutzschicht je nach System in der Regel bereits ausreichend ist. Im Falle eines zweischichtigen Aufbaus der Schutzschicht wird die zweite Schutzschicht frühestens nach 6 und bevorzugt frühestens nach 12 Stunden auf die erste Schutzschicht aufgetragen. Die Schutzschicht selbst kann transparent matt oder glänzend sein, wobei jeweils auch eine Einfärbung mit Pigmenten möglich ist.

Darüber hinaus kann die zu schützende Oberfläche vor dem Aufbringen der Schutzschicht insbesondere für dekorative Zwecke auch mit einer für die Oberfläche geeigneten Lackschicht versehen werden, wobei hier bevorzugt Lacke auf der Basis von Acrylat-Bindemitteln zum Einsatz kommen sollten.

In einem zweiten Schritt wird auf der Schutzschicht eine filmbildende, vorzugsweise einkomponentige Funktionsschicht aufgebracht. Vorzugsweise umfasst die Funktionsschicht eine selbstvernetzende Siloxan-Hybrid-Bindemittelbasis, insbesondere eine Polydimethylsiloxan Hybrid-Bindemittelbasis mit funktionellen Vernetzungsgruppen. Als funktionelle Vernetzungsgruppen dienen vorzugsweise Alkoxy-terminierte Siloxan-Bindemittelelemente. Die Vernetzung der einkomponentigen Funktionsschicht kann bei Raumtemperatur erfolgen, vorzugsweise durch Feuchtigkeit induzierte Hydrolyse ohne zusätzlichen Katalysator. Das spezielle chemisch vernetzte Polydimethylsiloxan Hybrid-Bindemittel zeichnet sich durch hohe intrinsische Vernetzungsdichte aus und stellt somit zusammen mit seinem robusten Bindemittelaufbau eine chemisch hoch belastbare und witterungsstabile Funktionsschicht gegenüber Graffitifarben dar.

Vorzugsweise wird die Funktionsschicht ohne jegliche Zwischenreinigung oder sonstige Zwischenbehandlung auf die Schutzschicht appliziert. Dies hat sich als vorteilhaft für eine bestmögliche Verbindung von Schutz- und Funktionsschicht herausgestellt. Die Funktionsschicht selbst kann transparent matt oder glänzend, aber auch mit Pigmenten eingefärbt sein. Bei der Funktionsschicht ist in der Regel ein einschichtiger Auftrag ausreichend, bei mit Pigment eingefärbter Funktionsschicht kann auch ein zweimaliger Auftrag für ein besseres Deckvermögen in Abhängigkeit vom Untergrund vorteilhaft sein.

Entsprechend umfasst die Erfindung auch ein Verfahren zur Beschichtung einer Oberfläche mit dem erfindungsgemäßen Beschichtungssystem, umfassend folgende Schritte:
(A) Auftragen der Schutzschicht;
(B) Trocknen der Schutzschicht für 6 bis 48 Stunden;
(C) Auftragen der Funktionsschicht.

Das Verfahren kann optional die
Reinigung der Oberfläche,
vor Schritt (A) einschließen.

Weiterhin kann das Verfahren auch das
(A1) Trocknen der Schutzschicht für mindestens 6 Stunden; sowie das
(A2) Auftragen einer weiteren Schutzschicht vorsehen.

Die Schritte (A1) und (A2) erfolgen nach Schritt (A) jedoch vor Schritt (B).

Die Kombination von Schutzschicht und Funktionsschicht zeichnet sich überraschender Weise dadurch aus, dass sich zwischen Schutzschicht und Funktionsschicht ein außerordentlich guter Haftverbund ausbildet und bei Graffiti-Anschlägen mit säurehaltigen- oder metallabscheidenden-Flüssigkeiten nur die Funktionsschicht angegriffen wird und die darunterliegende Schutzschicht ebenso intakt bleibt wie die vor der Graffiti-Attacke zu schützende Oberfläche.

Der außerordentlich gute Haftverbund beruht auf der speziell aufeinander abgestimmten Bindemittelzusammensetzung von Schutzschicht und Funktionsschicht in einer bevorzugten Ausführungsform.

Die Schutzschicht ist vorzugsweise eine zweikomponentige Beschichtung auf Basis von Silikon-Epoxid-Hybridharzen als Bindemitteln, dass mit Hilfe von Amino-Alkoxy-Silanen als Härter chemisch vernetzt wird. Das Silikon-Epoxid-Hybridharzen Bindemittel besteht aus einem aliphatischen Epoxid und chemisch angebundenen Polydimethylsiloxan. Der aliphatische Epoxid-Teil des Bindemittels besitzt Epoxy- und Hydroxy-funktionelle Gruppen, der Polydimethylsiloxan-Teil des Bindemittels ist mit Alkoxy-terminierten Funktionsgruppen ausgerüstet.

Als Härter für die Schutzschicht werden bevorzugt Amino-Alkoxy-Silanen eingesetzt, wobei im Rahmen des dualen Härtungsprozesses die AminoFunktion des Härters mit der aliphatischen Epoxid-Funktion des Bindemittels reagiert und die Alkoxy-Silan-Funktion des Härters mit der Alkoxy-terminierten Funktionsgruppen des Bindemittels durch Feuchtigkeit induzierte Hydrolyse reagiert.

Dieser duale Härtungsmechanismus erfolgt schon ausreichend bei Raumtemperatur, durch erhöhte Temperaturen kann der Härtungsgeschwindigkeit forciert werden. Die Härtung kann durch den Einsatz von Katalysatoren, wie z.B. handelsüblichen Zinn-, Zink-, Titan-, oder Zirkonium-Verbindungen oder auch organischen Säuren beschleunigt werden. Bevorzugt werden aufgrund der geringeren toxikologischen Einstufung Titan-, Zirkonium-Verbindungen oder organischen Säuren verwendet. Darüber hinaus kann die Bindemittelzusammensetzung so variiert werden, um die Vernetzungsdichte und Flexibilität der Schutzschicht selektiv einzustellen. Die ausgehärtete Schutzschicht zeichnet sich aufgrund der chemischen Zusammensetzung durch eine sehr hohe chemische Beständigkeit und Bewitterungsstabiltät aus und besitzt eine universelle Haftung auf einer Vielzahl unterschiedlicher zu schützender Oberflächen.

Die Funktionsschicht besteht aus einem bei Raumtemperatur selbstvernetzenden speziellen Polydimethylsiloxan-Hybrid-Bindemittel mit Alkoxy-terminierten Siloxan Funktion-Vernetzungsgruppen. Die Alkoxy-terminierten Siloxan Funktionsgruppen reagieren durch Feuchtigkeit induzierte Hydrolyse mit sich selbst zu einer hochvernetzten Funktionsschicht und zusätzlich mit den Alkoxy-terminierten Funktionsgruppen und Hydroxyfunktionellen Gruppen des Silikon-Epoxid-Hybridharzes des Schutzschicht-Bindemittels zu einem hoch belastbaren chemischen Verbund aus Schutz- und Funktionsschicht.

Dies ist insbesondere der Fall, wenn nach der Applikation der Schutzschicht innerhalb von 6 bis 48 Stunden und vorzugsweise zwischen 12 bis 24 Stunden die Applikation der Funktionsschicht darauf erfolgt.

Bei dem Zeitraum von 6 bis 48 und insbesondere von 12 bis 24 Stunden ist hier das optimale Verhältnis gefunden worden, in dem die chemischen Bindungen sich zwischen den beiden Schichten ausbildend können und stark genug sind, um dauerhaft zu halten, jedoch nicht so stark, dass sich die Funktionsschicht nicht reversibel von der Schutzschichtschicht zu lösen ist. Es darf keinerlei Zwischenbehandlung (z.B. Reinigung, Aktivierung, o. ä.) der Schutzschicht vor der Applikation der Funktionsschicht erfolgen, da dies die Ausbildung der selektiven chemischen Bindung zwischen diesen beiden Beschichtungen stören bzw. nicht positiv fördern würde.

Dies zeigt, dass die Kombination von der Schutzschicht basierend auf Silikon-Epoxid-Hybridharz Bindemittel mit funktionell vernetzenden Gruppen und einer Funktionsschicht basierend auf selbstvernetzenden Polydimethylsiloxan-Hybrid-Bindemittel mit funktionellen Vernetzungsgruppen besonders vorteilhaft ist, da sich bei dieser Kombination überraschenderweise eine sehr guter und chemisch hoch belastbarer Haftverbund zwischen den Schichten ausbilden kann.

Das erfindungsgemäße Beschichtungssystem stellt ein innovatives Schutzsystem gegen Graffiti-Attacken insbesondere mit säurehaltigen- oder metallabscheidenden-Flüssigkeiten dar, das zudem reversibel repariert und instandgesetzt werden kann.

Die Schutzschicht fungiert dabei als permanente Graffitischutz-Schicht für den Untergrund und die darauf applizierte Funktionsschicht als permanente und reversible Graffitischutz-Funktionsschicht.

Bei metallabscheidenden-Flüssigkeiten mit beispielsweise unlöslich elementar abgeschiedenem Kupfer wird diese auf und in der Funktionsschicht gebunden.

Mit dem erfindungsgemäßen Beschichtungssystem ist es nun möglich, selektiv die durch Graffitis beschädigte Funktionsschicht zu entfernen und zu erneuern, ohne dabei die darunterliegende Schutzschicht nennenswert zu beschädigen.

Die erfindungsgemäß auf der Schutzschicht aufgebrachte Funktionsschicht kann mit säurehaltigen Estern oder auch langkettigen Alkylestern nach kurzer Einwirkzeit von der darunterliegenden Schutzschicht abgelöst werden, ohne diese nennenswert zu beschädigen.

Als säurehaltige Ester können beispielsweise Phoshorsäurealkylester oder als langkettige Alkylester beispielsweise Methylalkylester mit einer Alkylkettenlänge von C-10 bis C-18 verwendet werden. Besonders bevorzugt ist Methyldecanoat.

Im Anschluss an die Ablösung der beschädigten Funktionsschicht kann an dieser Stelle die Funktionsschicht erneut appliziert werden. Überraschenderweise zeigt die neu applizierte Funktionsschicht den gleichen guten chemischen Haftverbund zur darunter liegenden Schutzschicht, wie nach der ersten erfindungsgemäß durchgeführten Applikation. Bei dem Entfernen der Funktionsschicht mit beispielsweise säurehaltigen Estern werden die chemischen Bindungen der zuvor hydrolisierten Alkoxy-Kopplungsgruppen gespalten. Bei der erneuten Applikation der Funktionsschicht können sich dann die chemische Bindung über die Hydrolyse der Alkoxy-Gruppen wieder ausbilden und den ausgezeichneten Haftverbund sicherstellen.

Der erfindungsgemäße Graffitischutz wirkt insbesondere bei Graffiti-Anschlägen mit säurehaltigen oder metallabscheidenden Flüssigkeiten, aber auch bei Graffiti-Anschlägen mit den gebräuchlichen und handelsüblichen Graffitisprays, Stiften, Markern und Tinten.

Aufgrund der Antihaftwirkung der Funktionsschicht sind oft bereits milde Tensid-Graffitireiniger für eine vollständige Graffiti-Entfernung ausreichend, teilweise ist je nach Grad der Verschmutzung auch eine Reinigung nur mit Wasser ohne den zusätzlichen Einsatz von chemischen Reinigern möglich. Außerdem zeigt das erfindungsgemäße Beschichtungssystem auch eine exzellente Antihaftwirkung gegenüber Aufkleber, Plakate und Poster.

### Beispiele

Die Anwendung beruht auf der Kombination von einer Schutzschicht mit zusätzlicher Funktionsschicht. Als Schutzschicht können chemisch hochbeständige Beschichtungen auf der Basis von Epoxid- und/oder PU-Bindemitteln eingesetzt werden. Bevorzugt werden Silikon-Epoxid-Hybridharze als Bindemitteln eingesetzt. Hier sind 1-Komponenten oder 2-Komponenten Mischsysteme, lösemittelhaltige oder wässrige Beschichtungen denkbar. Bevorzugt kommen zweikomponentige Beschichtungen auf Basis von Silikon-Epoxid-Hybridharzen als Bindemitteln, das mit Hilfe von Amino-Alkoxy-Silanen als Härter chemisch vernetzt wird, zum Einsatz.

Als zusätzliche Funktionsschicht können chemisch beständige und sich vernetzende Silikonbeschichtungen mit funktionellen Kopplungsgruppen eingesetzt werden. Diese können auf der Basis von 1-Komponenten oder 2-Komponenten Mischsystemen basieren und bei Raumtemperatur oder forcierter Trocknung (beispielsweise durch höhere Temperaturen) aushärten. Bevorzugt kommen erfindungsgemäß bei Raumtemperatur selbstvernetzende, einkomponentige Polydimethylsiloxan-Hybrid-Bindemittel mit Alkoxy-terminierten Siloxan-Vernetzungsgruppen zum Einsatz, die ohne zusätzlichen Katalysator durch Feuchtigkeit induzierte Hydrolyse sich selbst vernetzen und zusätzlich mit den funktionellen Kopplungsgruppen der Schutzschicht-Beschichtung.

Die Schutzschicht kann auf bereits gestrichenen und lackierten Flächen mit unterschiedlichsten Untergründen (z. B. Metall, Kunststoffe, Fliesen, harte nicht saugende mineralische Baustoffe etc.) eingesetzt werden.

Der Untergrund muss vor der Applikation der Schutzschicht trocken, sauber und tragfähig sein. Noch anhaftende Verschmutzungen, wie Öle, Fette oder Staub sind fachgerecht zu entfernen. Darüber hinaus ist zu empfehlen Altbeschichtungen generell zu reinigen bzw. anzulaugen und mit einem Schleifvlies anzupaden, um einen guten Haftverbund zu gewährleisten.

Die Applikation der Schutzschicht erfolgt vorzugsweise mit Farbwalzen. Es ist aber auch die Verarbeitung im Spritzverfahren (beispielsweise mittels Lackierpistole oder Airless) oder Streichverfahren möglich.

Schutzschichten mit Epoxy-Siloxan-Hybrid-Bindemitteln werden vorzugsweise mit einem mittleren Verbrauch von 40 bis 60 ml/m² pro Schicht appliziert. Eine einmalige Applikation der Schutzschicht ist in der Regel ausreichend.

Schutzschichten mit PU-Bindemitteln werden vorzugsweise in zwei Arbeitsgängen appliziert, wobei der 2. Anstrich frühestens nach 6 Stunden auf den 1. Anstrich erfolgen soll. Der gesamte mittlere Verbrauch liegt bei zwei Schichten bei 120 bis 200 ml/m² je nach Untergrund.

Innerhalb von 12 bis 24 Stunden erfolgt auf die zuvor aufgebrachte Schutzschicht vorzugsweise ohne jegliche Zwischenreinigung oder Zwischenbehandlung die Applikation der Funktionsschicht. Die Applikation erfolgt bevorzugt mit Rolle oder Pinsel. Bei einem einmaligen Auftrag der transparent matten oder glänzenden Funktionsschicht liegt der mittlere Verbrauch bei 60-80ml/m². Im Fall einer pigmentierten Form der Funktionsschicht kann unter Umständen ein zweifacher Auftrag notwendig sein, dann liegt der Verbrauch bei 80-120ml/m². Vorzugsweise handelt es sich bei der Funktionsschicht um ein 1-komponentiges, raumtemperatur-vernetzendes selbstreaktives Siloxan-Hybrid-System. Diese Systeme sind nach 4h staubtrocken und nach 24 Stunden durchgetrocknet und in verschiedenen Produktvarianten herstellbar, wie beispielsweise matt, glänzend oder mit Pigmenten eingefärbt.

Das erfindungsgemäße Beschichtungssystem ist ein innovatives Schutzsystem gegen Graffiti-Attacken verschiedenster Art. Insbesondere bei Graffiti-Attacken mit säurehaltigen-, ätzenden oder metallabscheidenden-Flüssigkeiten, kann das erfindungsgemäße Beschichtungssystem reversibel repariert und instandgesetzt werden ohne den zu schützenden Untergrund zu schädigen.

Das erfindungsgemäße Beschichtungssystem weist gegenüber dem Stand der Technik den Vorteil auf, dass die auf der permanenten Schutzschicht reversible aufgetragene Funktionsschicht ausgebessert werden kann, ohne die Schutzschicht zu beschädigen.

Bei aggressiven Graffiti-Attacken mit säurehaltigen-, ätzenden oder metallabscheidenden-Flüssigkeiten, kann das erfindungsgemäße Beschichtungssystem also reversibel repariert und instandgesetzt werden.

Dies ist möglich, da nur die Funktionsschicht vom aggressiven Graffiti-Medium angegriffen wird beziehungsweise die verwendeten Tinten, Säuren oder Laugen von der Funktionsschicht aufgenommen werden, bereits die darunter liegende Schutzschicht nicht mehr beschädigt wird und den darunterliegenden Untergrund weiterhin zuverlässig schützt.

Die von dem aggressiven Graffiti-Medium angegriffene Funktionsschicht lässt sich nach zuvor durchgeführter Graffitireinigung anschließend selektiv mit Produkten auf der Basis von säurehaltigen Estern oder auch langkettigen Alkylestern nach kurzer Einwirkzeit (10 bis 60 Minuten) von der darunterliegenden Schutzlackbeschichtung ablösen, ohne diese zu beschädigen.

Zur Beseitigung von Verschmutzungen oder konventionellen Graffitis von einer erfindungsgemäß behandelten Oberfläche können aufgrund der sehr guten Anti-Haft-Eigenschaften der Funktionsschicht unter günstigen Umständen bereits mit Wasser verdünnte Tenside ausreichen, ohne die Funktionsschicht abtragen zu müssen. Auch können zum Entfernen von konventionellen Graffitis in der Regel handelsübliche Graffitireiniger verwendet werden.

Darüber hinaus ermöglicht das erfindungsgemäße Beschichtungssystem aufgrund seiner sehr starken Anti-Haftwirkung einen wirkungsvollen Schutz gegen das Aufbringen von Aufklebern, Postern und Plakaten und bietet somit gegenüber bekannten Beschichtungen eine doppelte Wirksamkeit.

## Patentansprüche

1. Beschichtungssystem zum Schutz von Oberflächen vor Graffitis, umfassend eine erste Lackkomponente zur Bildung einer Schutzschicht auf der vor Graffitis zu schützenden Oberfläche und eine zweite Lackkomponente zur Bildung einer Funktionsschicht auf der Schutzschicht, wobei die erste Lackkomponente auf Epoxid-Bindemitteln und die zweite Lackkomponente auf einer selbstvernetzenden Siloxan-Hybrid-Bindemittelbasis basiert, **dadurch gekennzeichnet, dass** die erste Lackkomponente als Bindemittel Silikon-Epoxid-Hybridharze und die zweite Lackkomponente als Bindemittel eine Polydimethylsiloxan Hybrid-Bindemittelbasis mit funktionellen Vernetzungsgruppen umfassen und wobei die Funktionsschicht dazu bestimmt ist nach einer Trocknungszeit der Schutzschicht von 6 bis 48 Stunden auf die Schutzschicht aufgetragen zu werden, um eine reaktive Anbindung der Funktionsschicht an die Schutzschicht herbeizuführen.

2. Beschichtungssystem nach Anspruch 1, **dadurch gekennzeichnet, dass** die Funktionsschicht nach einer Trocknungszeit von 12 bis 24 Stunden auf die Schutzschicht aufgetragen wird, um eine reaktive Anbindung der Funktionsschicht an die Schutzschicht herbeizuführen.

3. Beschichtungssystem nach Anspruch 1, **dadurch gekennzeichnet, dass** die erste Lackkomponente zur Bildung der Schutzschicht ein 2-komponentiges Lacksystem ist und Amino-Alkoxy-Silane als Härter umfasst.

4. Beschichtungssystem nach einem der vorhergehenden Ansprüche, **dadurch gekennzeichnet, dass** die zweite Lackkomponente zur Bildung der Funktionsschicht einkomponentig ist.

5. Beschichtungssystem nach Anspruch 4, **dadurch gekennzeichnet, dass** die Vernetzung der einkomponentigen Funktionsschicht bei Raumtemperatur ohne zusätzlichen Katalysator durch Feuchtigkeit induzierte Hydrolyse erfolgt.

6. Verfahren zur Beschichtung einer Oberfläche mit dem Beschichtungssystem nach einem der Ansprüche 1 bis 5, umfassend folgende Schritte:
(A) Auftragen der Schutzschicht;
(B) Trocknen der Schutzschicht für 6 bis 48 Stunden;
(C) Auftragen der Funktionsschicht.

7. Verfahren nach Anspruch 6, **dadurch gekennzeichnet, dass** vor Schritt (A) die Oberfläche gereinigt wird.

8. Verfahren nach Anspruch 6 oder 7, **dadurch gekennzeichnet, dass** die Schutzschicht für mindestens 6 Stunden getrocknet wird und anschließend eine weitere Schutzschicht aufgetragen wird.

9. Verwendung des Beschichtungssystems nach einem der Ansprüche 1 bis 5 als Graffitischutz oder Schutz mit Anti-Haftwirkung, wobei eine erste Lackkomponente zur Bildung einer Schutzschicht zum Auftrag auf die zu schützende Oberfläche vorgesehen ist und eine zweite Lackkomponente zur Bildung einer Funktionsschicht zum Auftrag auf die Schutzschicht vorgesehen ist, wobei die erste Lackkomponente auf Epoxid-Bindemitteln und die zweite Lackkomponente auf einer selbstvernetzenden Siloxan-Hybrid-Bindemittelbasis basiert, wobei die erste Lackkomponente als Bindemittel Silikon-Epoxid-Hybridharze und die zweite Lackkomponente als Bindemittel eine Polydimethylsiloxan Hybrid-Bindemittelbasis mit funktionellen Vernetzungsgruppen umfassen und wobei die Funktionsschicht nach einer Trocknungszeit der Schutzschicht von 6 bis 48 Stunden auf die Schutzschicht aufgetragen wird, um eine reaktive Anbindung der Funktionsschicht an die Schutzschicht herbeizuführen.

10. Verwendung des Beschichtungssystems nach Anspruch 9 zum Schutz vor Graffitis auf Basis ätzender oder Metall abscheidender Materialien.

11. Verwendung des Beschichtungssystems nach Anspruch 9 zum Schutz gegen das Aufbringen von Aufklebern, Postern und Plakaten aufgrund der Anti-Haftwirkung.

## Claims

1. Coating system for protecting surfaces from graffiti, comprising a first lacquer component for forming a protective layer on the surface to be protected from graffiti and a second lacquer component for forming a functional layer on the protective layer, the first lacquer component being based on epoxy binders and the second lacquer component being based on a self-crosslinking siloxane hybrid binder base, **characterized in that** the first lacquer component comprises as binder silicone-epoxy hybrid resins and the second lacquer component comprises as binder a polydimethylsiloxane hybrid binder base with functional crosslinking groups and wherein the functional layer is intended to be applied to the protective layer after a drying time of the protective layer of 6 to 48 hours in order to achieve a reactive bonding of the functional layer to the protective layer.

2. Coating system according to claim 1, **characterized in that** the functional layer is applied to the protective layer after a drying time of 12 to 24 hours in order to achieve a reactive bonding of the functional layer to the protective layer.

3. Coating system according to claim 1, **characterized in that** the first lacquer component for forming the protective layer is a 2-component lacquer system and comprises amino-alkoxy-silanes as hardener.

4. Coating system according to one of the preceding claims, **characterized in that** the second lacquer component for forming the functional layer is single-component.

5. Coating system according to claim 4, **characterized in that** the crosslinking of the single-component functional layer takes place at room temperature without additional catalyst by moisture-induced hydrolysis.

6. A method of coating a surface with the coating system according to any one of claims 1 to 5, comprising the steps of:
(A) applying the protective coating;
(B) drying the protective layer for 6 to 48 hours;
(C) applying the functional layer.

7. Method according to claim 6, **characterized in that** before step (A), the surface is cleaned.

8. Method according to claim 6 or 7, **characterized in that** the protective layer is dried for at least 6 hours and then a further protective layer is applied.

9. Use of the coating system according to any one of claims 1 to 5 as graffiti protection or protection with anti-adhesion effect, wherein a first lacquer component is provided for forming a protective layer for application to the surface to be protected and a second lacquer component is provided for forming a functional layer for application to the protective layer, wherein the first lacquer component is based on epoxy binders and the second lacquer component is based on a self-crosslinking siloxane hybrid binder base, wherein the first coating component comprises silicone epoxy hybrid resins as binders and the second coating component comprises a polydimethylsiloxane hybrid binder base with functional crosslinking groups as binders, and wherein the functional layer is applied to the protective layer after a drying time of the protective layer of 6 to 46 hours in order to achieve a reactive bonding of the functional layer to the protective layer.

10. Use of the coating system according to claim 9 for protection against graffiti based on corrosive or metal-depositing materials.

11. Use of the coating system according to claim 9 for protection against the application of stickers, posters and placards due to the non-stick effect.

## Revendications

1. Système de revêtement pour la protection de surfaces contre les graffitis, comprenant un premier composant de laque pour la formation d'une couche de protection sur la surface à protéger contre les graffitis et un deuxième composant de laque pour la formation d'une couche fonctionnelle sur la couche de protection, le premier composant de laque étant à base de liants époxydes et le deuxième composant de laque étant à base d'un liant hybride siloxane autoréticulant, caractérisé en en ce que le premier composant de laque comprend comme liant des résines hybrides silicone-époxy et le deuxième composant de laque comprend comme liant une base de liant hybride polydiméthylsiloxane avec des groupes fonctionnels de réticulation et où la couche fonctionnelle est destinée à être appliquée sur la couche de protection après un temps de séchage de la couche de protection de 6 à 48 heures, afin de provoquer une liaison réactive de la couche fonctionnelle à la couche de protection.

2. Système de revêtement selon la revendication 1, **caractérisé en ce que** la couche fonctionnelle est appliquée sur la couche de protection après un temps de séchage de 12 à 24 heures, afin d'obtenir une liaison réactive de la couche fonctionnelle avec la couche de protection. couche fonctionnelle à la couche de protection.

3. Système de revêtement selon la revendication 1, **caractérisé en ce que** le premier composant de laque pour la formation de la couche de protection est un système de laque à 2 composants et comprend des aminoalcoxy-silanes comme durcisseur.

4. Système de revêtement selon l'une des revendications précédentes, **caractérisé en ce que** le deuxième composant de laque pour la formation de la couche fonctionnelle est à un seul composant.

5. Système de revêtement selon la revendication 4, **caractérisé en ce que** la réticulation de la couche fonctionnelle monocomposant s'effectue à température ambiante sans catalyseur supplémentaire par hydrolyse induite par l'humidité.

6. Procédé de revêtement d'une surface avec le système de revêtement selon l'une des revendications 1 à 5, comprenant les étapes suivantes:
(A) application de la couche protectrice;
(B) séchage de la couche de protection pendant 6 à 48 heures;
(C) application de la couche fonctionnelle.

7. Procédé selon la revendication 6, **caractérisé en ce que**, avant l'étape (A) la surface est nettoyée.

8. Procédé selon la revendication 6 ou 7, **caractérisé en ce que** la couche de protection est séchée pendant au moins 6 heures et qu'une autre couche de protection est ensuite appliquée.

9. Utilisation du système de revêtement selon l'une des revendications 1 à 5 en tant que protection contre les graffitis ou protection avec effet anti-adhérent, dans laquelle un premier composant de laque est prévu pour former une couche de protection à appliquer sur la surface à protéger et un deuxième composant de laque est prévu pour former une couche fonctionnelle à appliquer sur la couche de protection, le premier composant de laque étant à base de liants époxy et le deuxième composant de laque étant à base d'un liant hybride siloxane autoréticulant, le premier composant de laque comprenant comme liant des résines hybrides silicone-époxy et le deuxième composant de laque comprenant comme liant une base de liant hybride polydiméthylsiloxane avec des groupes fonctionnels de réticulation et la couche fonctionnelle étant appliquée sur la couche de protection après un temps de séchage de la couche de protection de 6 à 48 heures, pour établir une liaison réactive de la couche fonctionnelle à la couche des protection.

10. Utilisation du système de revêtement selon la revendication 9 pour la protection contre les graffitis à base de matériaux corrosifs ou de matériaux déposant des métaux.

11. Utilisation du système de revêtement selon la revendication 9 pour la protection contre l'application d'autocollants, d'affiches et de posters en raison de son effet anti-adhérent.
